(19) Europäisches Patentamt
European Patent Office
Office européen des brevets

(11) **EP 4 318 640 A1**

(12) **EUROPEAN PATENT APPLICATION**
published in accordance with Art. 153(4) EPC

(43) Date of publication:
**07.02.2024 Bulletin 2024/06**

(21) Application number: **22781186.6**

(22) Date of filing: **30.03.2022**

(51) International Patent Classification (IPC):
$H01M\ 4/131^{(2010.01)}$    $H01G\ 11/06^{(2013.01)}$
$H01G\ 11/26^{(2013.01)}$    $H01G\ 11/30^{(2013.01)}$
$H01G\ 11/38^{(2013.01)}$    $H01G\ 11/68^{(2013.01)}$
$H01M\ 4/13^{(2010.01)}$    $H01M\ 4/36^{(2006.01)}$
$H01M\ 4/505^{(2010.01)}$    $H01M\ 4/525^{(2010.01)}$
$H01M\ 4/62^{(2006.01)}$    $H01M\ 4/66^{(2006.01)}$

(52) Cooperative Patent Classification (CPC):
H01G 11/06; H01G 11/26; H01G 11/30;
H01G 11/38; H01G 11/68; H01M 4/13;
H01M 4/131; H01M 4/36; H01M 4/505;
H01M 4/525; H01M 4/62; H01M 4/66; Y02E 60/10

(86) International application number:
**PCT/JP2022/016300**

(87) International publication number:
**WO 2022/210976 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021062093**

(71) Applicant: **Zeon Corporation
Tokyo 100-8246 (JP)**

(72) Inventors:
• **ITO Yukie
Tokyo 100-8246 (JP)**
• **ASAI Kazuki
Tokyo 100-8246 (JP)**

(74) Representative: **Maiwald GmbH
Elisenhof
Elisenstraße 3
80335 München (DE)**

(54) **ELECTRODE FOR ELECTROCHEMICAL ELEMENT, AND ELECTROCHEMICAL ELEMENT**

(57) Provided is an electrode for an electrochemical device that has excellent flexibility, suppressed warping, and reduced interfacial resistance between an electrode mixed material layer and a current collector and that can cause an electrochemical device to display excellent high-temperature storage characteristics. The electrode includes a current collector and an electrode mixed material layer formed on the current collector. The current collector is formed of either or both of aluminum and an aluminum alloy, has a thickness of not less than 5 $\mu$m and less than 15 $\mu$m, and has a breaking elongation of 10% to 40%. The electrode mixed material layer contains electrode active material particles, a conductive material including a fibrous carbon material, and a binder and has a mass per unit area of 21 mg/cm$^2$ to 30 mg/cm$^2$, a storage modulus of 0.1 GPa to 2.2 GPa, and a loss modulus of 0.01 GPa to 0.04 GPa.

EP 4 318 640 A1

**Description**

TECHNICAL FIELD

The present disclosure relates to an electrode for an electrochemical device and an electrochemical device.

BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide variety of applications. An electrode for an electrochemical device typically includes a current collector and an electrode mixed material layer formed on the current collector. The electrode mixed material layer may be obtained by binding components such as electrode active material particles and a conductive material through a binder such that these components are disposed on the current collector, for example.

In recent years, fibrous carbon materials such as carbon nanotubes (hereinafter, also abbreviated as "CNTs") have been widely adopted as conductive materials used in the formation of electrode mixed material layers (for example, refer to Patent Literature (PTL) 1). Fibrous carbon materials such as CNTs can contribute to improving device characteristics of an electrochemical device as a result of being capable of forming good electrical conduction paths in an electrode mixed material layer.

CITATION LIST

Patent Literature

PTL 1: JP2019-502240A

SUMMARY

(Technical Problem)

However, in the conventional technique described above, there has been demand for enhancing physical properties of an electrode that includes an electrode mixed material layer containing a fibrous carbon material while also causing an electrochemical device to display even better device characteristics. Specifically, there has been demand for an electrode to have flexibility such that cracking of an electrode mixed material layer does not occur even when the electrode is wound in production of an electrochemical device, for example. There has also been demand for suppressing warping of an electrode by reducing residual stress in an electrode mixed material layer. In addition to physical properties such as described above, there has also been demand for an electrode to have reduced resistance at an interface between an electrode mixed material layer and a current collector (interfacial resistance) and to improve device characteristics. Furthermore, there has been demand for suppressing excessive increase of IV resistance in an electrochemical device including the aforementioned electrode even upon long-term storage of the electrochemical device at high temperature (i.e., enhancement of high-temperature storage characteristics of the electrochemical device).

Accordingly, one object of the present disclosure is to provide an electrode for an electrochemical device that has excellent flexibility, suppressed warping, and reduced interfacial resistance between an electrode mixed material layer and a current collector and that can cause an electrochemical device to display excellent high-temperature storage characteristics.

Another object of the present disclosure is to provide an electrochemical device having excellent high-temperature storage characteristics.

(Solution to Problem)

The inventors conducted diligent investigation with the aim of solving the problems set forth above. The inventors made a new discovery that in the case of an electrode including a current collector that is formed of aluminum and/or an aluminum alloy and that has specific properties and an electrode mixed material layer that contains a fibrous carbon material as a conductive material and that has specific properties, this electrode has excellent flexibility, low susceptibility to warping, and reduced interfacial resistance between the electrode mixed material layer and the current collector, and an electrochemical device can be caused to display excellent high-temperature storage characteristics through this electrode. In this manner, the inventors completed the present disclosure.

Specifically, the present disclosure aims to advantageously solve the problems set forth above, and a presently disclosed electrode for an electrochemical device comprises: a current collector; and an electrode mixed material layer formed on the current collector, wherein the current collector is formed of either or both of aluminum and an aluminum alloy, has a thickness of not less than 5 $\mu$m and less than 15 $\mu$m, and has a breaking elongation of not less than 10% and not more than 40%, the electrode mixed material layer contains electrode active material particles, a conductive material that includes a fibrous carbon material, and a binder, and the electrode mixed material layer has a mass per unit area of not less than 21 mg/cm$^2$ and not more than 30 mg/cm$^2$, a storage modulus of not less than 0.1 GPa and not more than 2.2 GPa, and a loss modulus of not less than 0.01 GPa and not more than 0.04 GPa. An electrode in which the current collector and electrode mixed material layer set forth above are stacked has excellent flexibility, suppressed warping, and reduced interfacial resistance between the electrode mixed material layer and the current collector. In addition, through this electrode, it is possible to cause an electrochemical device to display excellent high-temperature storage characteristics.

Note that the breaking elongation and thickness of a current collector and the mass per unit area, storage modulus, and loss modulus of an electrode mixed material layer that are referred to in the present disclosure can be measured by methods described in the EXAMPLES section.

The "mass per unit area" of an electrode mixed material layer referred to in the present disclosure is a value that is obtained by dividing the mass of an electrode mixed material layer formed at one side of a current collector by the formation area of the electrode mixed material layer on the current collector.

The term "fibrous carbon material" as used in the present disclosure refers to a carbon material having an aspect ratio (major axis/minor axis) of 5 or more. Note that the aspect ratio of a fibrous carbon material is normally more than 10. Moreover, the "aspect ratio" can be determined by observing the fibrous carbon material using an SEM (scanning electron microscope), measuring the maximum diameter (major axis) and the fiber diameter (minor axis) in a direction orthogonal to the maximum diameter for arbitrary fibers of the fibrous carbon material, and calculating a ratio of the major axis and the minor axis (major axis/minor axis).

In the presently disclosed electrode for an electrochemical device, the binder preferably includes a polymer that includes a nitrile group-containing monomer unit and an alkylene structural unit. By using a polymer that includes a nitrile group-containing monomer unit and an alkylene structural unit as the binder, it is possible to further improve flexibility of the electrode while also even further suppressing cracking of the electrode. In addition, interfacial resistance between the electrode mixed material layer and the current collector can be further reduced while also even further improving high-temperature storage characteristics of an electrochemical device.

Note that the phrase "includes a monomer unit" as used in the present disclosure means that "a structural unit derived from that monomer is included in a polymer obtained using the monomer".

In the presently disclosed electrode for an electrochemical device, it is preferable that the electrode active material particles have a coating layer formed of one or more selected from the group consisting of zirconium oxide, aluminum oxide, boron oxide, and phosphorus oxide formed at surfaces thereof, and the coating layer constitutes a proportion of not less than 0.2 mass% and not more than 10 mass% among the electrode active material particles as a whole. When a coating layer that is formed of one or more of the oxides set forth above is formed at surfaces of the electrode active material particles in an amount that is within the range set forth above, flexibility of the electrode can be further improved while also even further suppressing cracking of the electrode. In addition, interfacial resistance between the electrode mixed material layer and the current collector can be further reduced while also even further improving high-temperature storage characteristics of an electrochemical device.

Note that the "proportion constituted by a coating layer among electrode active material particles as a whole" that is referred to in the present disclosure can be determined by scanning electron microscope/energy dispersive X-ray spectroscopy (SEM/EDX). For example, this proportion can be determined through observation of an electrode surface (particularly an active material surface) by SEM/EDX with a JSM-7800F (produced by JEOL Ltd.) as an instrument, a lower detector (LED) as a detector, and an accelerating voltage of 15 kV.

In the presently disclosed electrode for an electrochemical device, it is preferable that the binder includes a polymer that includes a nitrile group-containing monomer unit and an alkylene structural unit, the electrode active material particles have a coating layer formed of one or more selected from the group consisting of zirconium oxide, aluminum oxide, boron oxide, and phosphorus oxide formed at surfaces thereof, and a ratio of total mass of the nitrile group-containing monomer unit included in the polymer in the electrode mixed material layer relative to total mass of the coating layer formed at the surfaces of the electrode active material particles in the electrode mixed material layer is not less than $0.1 \times 10^{-2}$ and not more than $30 \times 10^{-2}$. When the ratio of the total mass of nitrile group-containing monomer units originating from the polymer relative to the total mass of the coating layer in the electrode mixed material layer (total mass of nitrile group-containing monomer units/total mass of coating layer) is within the range set forth above, flexibility of the electrode can be further improved while also even further suppressing cracking of the electrode. In addition, interfacial resistance between the electrode mixed material layer and the current collector can be further reduced while also even further improving high-temperature storage characteristics of an electrochemical device.

Note that "total mass of nitrile group-containing monomer units/total mass of coating layer" referred to in the present disclosure can be calculated from the content of a polymer in an electrode mixed material layer, the proportion constituted by nitrile group-containing monomer units included in that polymer, the content of electrode active material particles in the electrode mixed material layer, and the proportion constituted by a coating layer among the electrode active material particles as a whole.

In the presently disclosed electrode for an electrochemical device, the fibrous carbon material preferably has a BET specific surface area of 250 $m^2/g$ or more. By using a fibrous carbon material having a BET specific surface area that is not less than the value set forth above, it is possible to further reduce interfacial resistance between the electrode mixed material layer and the current collector while also even further improving high-temperature storage characteristics of an electrochemical device.

Note that the term "BET specific surface area" as used in the present disclosure refers to nitrogen adsorption specific surface area measured by the BET method and can be measured in accordance with ASTM D3037-81.

In the presently disclosed electrode for an electrochemical device, the conductive material preferably further includes a non-fibrous carbon material. By using a fibrous carbon material and a non-fibrous carbon material in combination as the conductive material, it is possible to further reduce interfacial resistance between the electrode mixed material layer and the current collector.

Note that the term "non-fibrous carbon material" as used in the present disclosure refers to a carbon material having any shape (particle shape or plate shape) that does not correspond to the previously described fibrous carbon material.

In the presently disclosed electrode for an electrochemical device, the non-fibrous carbon material is preferably graphene. By using graphene as the aforementioned non-fibrous carbon material, it is possible to even further reduce interfacial resistance between the electrode mixed material layer and the current collector.

In the presently disclosed electrode for an electrochemical device, it is preferable that the electrode active material particles contain nickel and cobalt and further contain either or both of manganese and aluminum. By using electrode active material particles that contain nickel, cobalt, and either or both of manganese and aluminum, it is possible to further reduce interfacial resistance between the electrode mixed material layer and the current collector while also even further improving high-temperature storage characteristics of an electrochemical device.

Moreover, the present disclosure aims to advantageously solve the problems set forth above, and a presently disclosed electrochemical device comprises any one of the electrodes for an electrochemical device set forth above. An electrochemical device that includes any one of the electrodes set forth above has excellent device characteristics such as high-temperature storage characteristics.

(Advantageous Effect)

According to the present disclosure, it is possible to provide an electrode for an electrochemical device that has excellent flexibility, suppressed warping, and reduced interfacial resistance between an electrode mixed material layer and a current collector and that can cause an electrochemical device to display excellent high-temperature storage characteristics.

Moreover, according to the present disclosure, it is possible to provide an electrochemical device having excellent high-temperature storage characteristics.

DETAILED DESCRIPTION

The following provides a detailed description of embodiments of the present disclosure.

The presently disclosed electrode for an electrochemical device is used as an electrode of an electrochemical device such as a lithium ion secondary battery. Moreover, the presently disclosed electrochemical device includes the presently disclosed electrode for an electrochemical device.

(Electrode for electrochemical device)

The presently disclosed electrode includes at least an electrode mixed material layer and a current collector. Note that the presently disclosed electrode may include an electrode mixed material layer at just one side of the current collector or may include electrode mixed material layers at both sides of the current collector.

The presently disclosed electrode has excellent flexibility and suppressed warping as a result of including a specific current collector and a specific electrode mixed material layer that are described below. In addition, the presently disclosed electrode has reduced interfacial resistance between the electrode mixed material layer and the current collector, and by using this electrode, it is possible to cause an electrochemical device to display excellent high-temperature storage characteristics.

Note that in a case in which the presently disclosed electrode includes electrode mixed material layers at both sides of the current collector, so long as at least one of the electrode mixed material layers is the specific electrode mixed material layer described below, it is possible to reduce interfacial resistance between that electrode mixed material layer and the current collector while also sufficiently achieving an effect in relation to high-temperature storage characteristics of an electrochemical device. In other words, in a case in which the presently disclosed electrode includes a plurality of electrode mixed material layers, at least one electrode mixed material layer should contain electrode active material particles, a conductive material including a fibrous carbon material, and a binder, and the at least one electrode mixed material layer should have a mass per unit area, a storage modulus, and a loss modulus that are within specific ranges.

<Current collector>

The current collector is made of aluminum and/or an aluminum alloy, has a thickness of not less than 5 $\mu$m and less than 15 $\mu$m, and has a breaking elongation of not less than 10% and not more than 40%.

«Material»

The material of the current collector is aluminum and/or an aluminum alloy as previously described. The aluminum alloy may, for example, be an alloy of aluminum and one or more elements selected from the group consisting of iron, magnesium, zinc, manganese, and silicon.
Note that aluminum and an aluminum alloy may be used in combination, or different types of aluminum alloys may be used in combination. Aluminum and aluminum alloys are excellent current collector materials due to having heat resistance and being electrochemically stable.

<<Thickness>>

The thickness of the current collector is required to be not less than 5 $\mu$m and less than 15 $\mu$m as previously described, is preferably 6 $\mu$m or more, and more preferably 8 $\mu$m or more, and is preferably 14 $\mu$m or less, more preferably 13 $\mu$m or less, and even more preferably 12 $\mu$m or less. When the thickness of the current collector is less than 5 $\mu$m, warping of the electrode cannot be suppressed, and severing of the current collector may occur when the electrode is wound. On the other hand, flexibility of the electrode is lost when the thickness of the current collector is 15 $\mu$m or more.

<<Breaking elongation>>

The breaking elongation of the current collector is required to be not less than 10% and not more than 40% as previously described, is preferably 15% or more, and more preferably 20% or more, and is preferably 30% or less, and more preferably 25% or less. When the breaking elongation of the current collector is less than 10%, flexibility of the electrode is lost, and high-temperature storage characteristics of an electrochemical device deteriorate. On the other hand, when the breaking elongation of the current collector is more than 40%, interfacial resistance between the electrode mixed material layer and the current collector increases, and high-temperature storage characteristics of an electrochemical device deteriorate.
Note that the breaking elongation of the current collector can be controlled by altering the thickness of the current collector, the shaping conditions when the current collector is produced through shaping of aluminum and/or an aluminum alloy, and so forth. Specifically, the breaking elongation can be controlled through a processing effect and a foreign element addition effect. The processing effect refers to processing a current collector foil by rolling or the like so as to control the lattice spacing of constituent elements of the current collector foil. Moreover, the foreign element addition effect refers to addition of a foreign element to an aluminum foil, for example. Through these effects, it is possible to control lattice energy and to control the breaking elongation.

«Surface roughness»

The surface roughness of the current collector at a surface where the electrode mixed material layer is formed is preferably 0.1 $\mu$m or more, and more preferably 0.2 $\mu$m or more, and is preferably 5.0 $\mu$m or less, and more preferably 3.0 $\mu$m or less. When the surface roughness of the current collector is within any of the ranges set forth above, sufficient close adherence of the electrode mixed material layer and the current collector can be achieved while also even further reducing interfacial resistance between the electrode mixed material layer and the current collector.
Note that the term "surface roughness" as used in the present disclosure refers to the arithmetic average roughness Ra determined in accordance with JIS B0601(1994).

<Electrode mixed material layer>

The electrode mixed material layer contains electrode active material particles, a conductive material including a fibrous carbon material, and a binder, and optionally contains components other than the electrode active material particles, the conductive material, and the binder (i.e., other components).

The electrode mixed material layer is required to have a mass per unit area of not less than 21 mg/cm$^2$ and not more than 30 mg/cm$^2$, a storage modulus of not less than 0.1 GPa and not more than 2.2 GPa, and a loss modulus of not less than 0.01 GPa and not more than 0.04 GPa.

«Electrode active material particles»

Particles containing a known electrode active material can be used as the electrode active material particles (positive electrode active material particles or negative electrode active material particles) without any specific limitations.

Examples of positive electrode active materials that may form positive electrode active material particles used in a lithium ion secondary battery, for example, include lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium manganese phosphate ($LiMnPO_4$), olivine-type lithium iron phosphate ($LiFePO_4$), and lithium-rich spinel compounds represented by $Li_{1+x}Mn_{2-x}O_4$ (0 < x < 2). One of these positive electrode active materials may be used individually, or two or more of these positive electrode active materials may be used in combination in a freely selected ratio. From a viewpoint of further reducing interfacial resistance between the electrode mixed material layer and the current collector while also even further improving high-temperature storage characteristics of an electrochemical device, the positive electrode active material is preferably a positive electrode active material that contains nickel and cobalt and further contains either or both of manganese and aluminum, and is more preferably a lithium-containing complex oxide of Co-Ni-Mn or a lithium-containing complex oxide of Ni-Co-Al.

[Coating layer]

The electrode active material particles preferably have a coating layer formed of one or more selected from the group consisting of zirconium oxide ($ZrO_2$), aluminum oxide ($Al_2O_3$), boron oxide ($B_2O_3$), and phosphorus oxide ($P_2O_5$, $P_4O_{10}$) formed at the surfaces thereof. Electrical conductivity of the electrode active material particles improves as a result of the electrode active material particles having a coating layer formed of an oxide at the surfaces thereof. Therefore, interfacial resistance between the electrode mixed material layer and the current collector can be further reduced while also even further improving high-temperature storage characteristics of an electrochemical device by using electrode active material particles having a coating layer.

Note that the coating layer may partially coat the surfaces of the electrode active material particles or may completely coat the surfaces of the electrode active material particles.

From a viewpoint of even better obtaining the effect of lowering interfacial resistance and the effect of improving high-temperature storage characteristics described above, it is preferable that the electrode active material particles have a coating layer formed of boron oxide formed at the surfaces thereof.

The proportion constituted by the coating layer among the electrode active material particles as a whole when the mass of the electrode active material particles including the coating layer as a whole is taken to be 100 mass% is preferably 0.2 mass% or more, more preferably 0.5 mass% or more, even more preferably 0.8 mass% or more, and particularly preferably 1 mass% or more, and is preferably 10 mass% or less, more preferably 7 mass% or less, even more preferably 5 mass% or less, and particularly preferably 3 mass% or less. When the proportion constituted by the coating layer among the electrode active material particles as a whole is 0.2 mass% or more, the effect of lowering interfacial resistance and the effect of improving high-temperature storage characteristics described above can be even better achieved. On the other hand, when the proportion constituted by the coating layer among the electrode active material particles as a whole is 10 mass% or less, adsorption of the binder to the electrode active material particles is not excessively impeded by the coating layer formed of an oxide in a slurry (slurry for an electrode) used to form the electrode mixed material layer, and an electrode mixed material layer having the electrode active material particles and the conductive material uniformly distributed throughout can be obtained. It is presumed that as a result of the electrode active material particles and the conductive material being uniformly distributed throughout the electrode mixed material layer in this manner, flexibility of the electrode can be further improved while also sufficiently suppressing warping of the electrode when the proportion constituted by the coating layer among the electrode active material particles as a whole is 10 mass% or less. In addition, interfacial resistance between the electrode mixed material layer and the current collector can be further reduced while also even further improving high-temperature storage characteristics of an electrochemical device.

The method by which the electrode active material particles having the above-described coating layer formed at the surfaces thereof are obtained is not specifically limited and may, for example, be a method in which a coating material and core particles formed of an electrode active material are mixed and then the resultant mixture is subjected to heat treatment.

The coating material is not specifically limited so long as it is a substance that can provide a coating layer formed of a specific oxide at the surfaces of the core particles through heat treatment, and an oxide itself can be used as the coating material. For example, in a situation in which a coating layer of boron oxide is to be formed, boron oxide, boric acid ($H_3BO_3$), or the like can be used as the coating material. One coating material may be used individually, or two or more coating materials may be used in combination in a freely selected ratio.

Note that the mixing ratio of the coating material and the core particles formed of an electrode active material may be set as appropriate depending on the expected value for the proportion constituted by the coating layer among the electrode active material particles as a whole.

Moreover, the heat treatment that is performed with respect to the mixture of the coating material and the core particles formed of an electrode active material is not specifically limited and can be performed at a temperature of not lower than 200°C and not higher than 500°C, for example. Moreover, the duration of the heat treatment is not specifically limited and can be set as not less than 1 hour and not more than 10 hours.

[Content of electrode active material particles]

The proportion constituted by the electrode active material particles contained in the electrode mixed material layer when the electrode mixed material layer as a whole is taken to be 100 mass% is preferably 90 mass% or more, more preferably 93 mass% or more, and even more preferably 96 mass% or more, and is preferably 99 mass% or less. When the proportion constituted by the electrode active material particles among the electrode mixed material layer is within any of the ranges set forth above, flexibility of the electrode can be further improved while also even further suppressing cracking of the electrode. In addition, interfacial resistance between the electrode mixed material layer and the current collector can be further reduced while also even further improving high-temperature storage characteristics of an electrochemical device.

<<Conductive material>>

Although at least a fibrous carbon material is used as the conductive material, it is also possible to use a fibrous carbon material and a conductive material other than a fibrous carbon material (other conductive material) in combination as the conductive material.

[Fibrous carbon material]

The fibrous carbon material may be carbon nanofibers, carbon nanotubes, or the like, for example. One of these fibrous carbon materials may be used individually, or two or more of these fibrous carbon materials may be used in combination in a freely selected ratio. Of these fibrous carbon materials, carbon nanotubes are preferable from a viewpoint of further reducing interfacial resistance between the electrode mixed material layer and the current collector while also even further improving high-temperature storage characteristics of an electrochemical device.

Note that the CNTs may be single-walled carbon nanotubes or may be multi-walled carbon nanotubes. Moreover, single-walled CNTs and multi-walled CNTs may be used in combination as the CNTs.

The BET specific surface area of the fibrous carbon material is preferably 250 $m^2$/g or more, and more preferably 280 $m^2$/g or more, and is preferably 1,500 $m^2$/g or less, and more preferably 1,000 $m^2$/g or less. When the BET specific surface area of the fibrous carbon material is within any of the ranges set forth above, interfacial resistance between the electrode mixed material layer and the current collector can be further reduced while also even further improving high-temperature storage characteristics of an electrochemical device.

Note that the fibrous carbon material such as CNTs may be a fibrous carbon material synthesized by a known synthesis method such as arc discharge, laser ablation, or chemical vapor deposition (CVD) without any specific limitations.

[Other conductive material]

The other conductive material is not specifically limited so long as it is a material that functions as a conductive material that can ensure electrical contact among an electrode active material in an electrode mixed material layer. Examples of other conductive materials include non-fibrous carbon materials and various metal materials, though a non-fibrous carbon material is preferable from a viewpoint of further reducing interfacial resistance between the electrode mixed material layer and the current collector.

The non-fibrous carbon material may be graphene, carbon black (for example, acetylene black, Ketjenblack[®] (Ketjenblack is a registered trademark in Japan, other countries, or both), or furnace black), graphite, or carbon flakes, for example. Of these non-fibrous carbon materials, graphene is preferable from a viewpoint of even further reducing interfacial resistance between the electrode mixed material layer and the current collector.

Note that one other conductive material may be used individually, or two or more other conductive materials may be used in combination in a freely selected ratio.

In a case in which a fibrous carbon material and a non-fibrous carbon material are used in combination, a ratio of the mass of the non-fibrous carbon material relative to the mass of the fibrous carbon material (non-fibrous carbon material/fibrous carbon material) is preferably 0.01 or more, more preferably 0.05 or more, and even more preferably 0.1 or more, and is preferably 5.0 or less, more preferably 3.0 or less, even more preferably 2.0 or less, and particularly preferably 1.0 or less. When the value of "non-fibrous carbon material/fibrous carbon material" is within any of the ranges set forth above, interfacial resistance between the electrode mixed material layer and the current collector can be even further reduced.

[Content of conductive material]

The proportion constituted by the conductive material contained in the electrode mixed material layer when the electrode mixed material layer as a whole is taken to be 100 mass% is preferably 0.3 mass% or more, more preferably 0.5 mass% or more, and even more preferably 0.7 mass% or more, and is preferably 5 mass% or less, more preferably 3 mass% or less, and even more preferably 2 mass% or less. When the proportion constituted by the conductive material among the electrode mixed material layer is within any of the ranges set forth above, flexibility of the electrode can be further improved while also even further suppressing cracking of the electrode. In addition, interfacial resistance between the electrode mixed material layer and the current collector can be further reduced while also even further improving high-temperature storage characteristics of an electrochemical device.

<<Binder>>

Any binder can be used as the binder without any specific limitations so long as it is a polymer that can hold components contained in the electrode mixed material layer such that these components do not detach from the electrode mixed material layer. However, from a viewpoint of further improving flexibility of the electrode while also even further suppressing cracking of the electrode and from a viewpoint of further reducing interfacial resistance between the electrode mixed material layer and the current collector while also even further improving high-temperature storage characteristics of an electrochemical device, a polymer that includes a nitrile group-containing monomer unit and an alkylene structural unit and that optionally further includes other repeating units is preferable.

[Polymer including nitrile group-containing monomer unit and alkylene structural unit]

-Nitrile group-containing monomer unit-

Examples of nitrile group-containing monomers that can form the nitrile group-containing monomer unit include an $\alpha,\beta$-ethylenically unsaturated nitrile monomer. The $\alpha,\beta$-ethylenically unsaturated nitrile monomer is not specifically limited so long as it is an $\alpha,\beta$-ethylenically unsaturated compound that includes a nitrile group, and may, for example, be acrylonitrile; an $\alpha$-halogenoacrylonitrile such as $\alpha$-chloroacrylonitrile or $\alpha$-bromoacrylonitrile; or an $\alpha$-alkylacrylonitrile such as methacrylonitrile or $\alpha$-ethylacrylonitrile. Of these examples, acrylonitrile and methacrylonitrile are preferable, and acrylonitrile is more preferable as a nitrile group-containing monomer.

One of these nitrile group-containing monomers can be used individually, or two or more of these nitrile group-containing monomers can be used in combination.

The proportion constituted by nitrile group-containing monomer units in the polymer when all repeating units (total of structural units and monomer units) in the polymer are taken to be 100 mass% is preferably 10 mass% or more, more preferably 20 mass% or more, even more preferably 30 mass% or more, and particularly preferably 35 mass% or more, and is preferably 50 mass% or less, and more preferably 40 mass% or less. By setting the proportion constituted by nitrile group-containing monomer units as within any of the ranges set forth above, it is possible to further improve flexibility of the electrode while also sufficiently suppressing warping of the electrode. In addition, interfacial resistance between the electrode mixed material layer and the current collector can be further reduced while also even further improving high-temperature storage characteristics of an electrochemical device.

Note that the proportional contents of repeating units (monomer units and structural units) in a polymer can be measured by a nuclear magnetic resonance (NMR) method such as $^1$H-NMR or $^{13}$C-NMR.

-Total mass of nitrile group-containing monomer units/total mass of coating layer-

In a case in which the binder includes the above-described polymer that includes a nitrile group-containing monomer unit and an alkylene structural unit and in which the electrode active material particles have the above-described coating layer formed of one or more selected from the group consisting of zirconium oxide, aluminum oxide, boron oxide, and phosphorus oxide formed at the surfaces thereof, a ratio of the total mass of nitrile group-containing monomer units included in the above-described polymer in the electrode mixed material layer relative to the total mass of the above-described coating layer formed at the surfaces of the electrode active material particles in the electrode mixed material layer is preferably $0.1 \times 10^{-2}$ or more, more preferably $2 \times 10^{-2}$ or more, even more preferably $3 \times 10^{-2}$ or more, and particularly preferably $4 \times 10^{-2}$ or more, and is preferably $30 \times 10^{-2}$ or less, more preferably $15 \times 10^{-2}$ or less, even more preferably $10 \times 10^{-2}$ or less, and particularly preferably $8 \times 10^{-2}$ or less. When "total mass of nitrile group-containing monomer units/total mass of coating layer" is within any of the ranges set forth above, it is possible to achieve a good balance of improvement of electrical conductivity of the electrode active material particles through formation of the coating layer, adsorption of the polymer to the electrode active material particles through the contribution of nitrile group-containing monomer units, and adsorption of the polymer to the conductive material through the contribution of alkylene structural units. It is presumed that for this reason, flexibility of the electrode can be further improved while also sufficiently suppressing warping of the electrode when "total mass of nitrile group-containing monomer units/total mass of coating layer" is within any of the ranges set forth above. In addition, interfacial resistance between the electrode mixed material layer and the current collector can be further reduced while also even further improving high-temperature storage characteristics of an electrochemical device.

-Alkylene structural unit-

The alkylene structural unit is a repeating unit that is composed of only an alkylene structure represented by a general formula: $-C_nH_{2n}-$ (n is an integer of 2 or more).
Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).
Examples of methods by which the alkylene structural unit can be introduced into the polymer include, but are not specifically limited to, the following methods (1) and (2).

(1) A method in which a polymer is produced from a monomer composition containing a conjugated diene monomer and then the polymer is hydrogenated so as to convert a conjugated diene monomer unit to an alkylene structural unit
(2) A method in which a polymer is produced from a monomer composition containing a 1-olefin monomer (for example, ethylene, propylene, 1-butene, or 1-hexene)

Of these methods, method (1) is preferable in terms of ease of production of the polymer.
The conjugated diene monomer may be a conjugated diene compound having a carbon number of 4 or more such as 1,3-butadiene, isoprene, 2,3-dimethyl-1,3-butadiene, 2-ethyl-1,3-butadiene, or 1,3-pentadiene, for example. Of these conjugated diene compounds, 1,3-butadiene is preferable.
In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).
Note that one of the above-described conjugated diene monomers or 1-olefin monomers can be used individually, or two or more of the above-described conjugated diene monomers or 1-olefin monomers can be used in combination.
The proportional content of alkylene structural units (total proportional content of alkylene structural units and conjugated diene monomer units in a case in which an alkylene structural unit is introduced by method (1)) in the polymer when all repeating units (total of structural units and monomer units) in the polymer are taken to be 100 mass% is preferably 30 mass% or more, more preferably 50 mass% or more, and even more preferably 60 mass% or more, and is preferably 80 mass% or less, more preferably 75 mass% or less, and even more preferably 70 mass% or less. By setting the proportional content of alkylene structural units in the polymer as within any of the ranges set forth above, it is possible to further improve flexibility of the electrode while also sufficiently suppressing warping of the electrode. In addition, interfacial resistance between the electrode mixed material layer and the current collector can be further reduced while also even further improving high-temperature storage characteristics of an electrochemical device.

-Other repeating units-

No specific limitations are placed on monomers that can form other repeating units (hereinafter, also referred to as "other monomers"), and examples thereof include (meth)acrylic acid ester monomers; aromatic ring-containing monomers such as styrene; and hydrophilic group-containing polymerizable monomers.

Note that one of these monomers can be used individually, or two or more of these monomers can be used in combination. In the present disclosure, "(meth)acryl" is used to indicate "acryl" and/or "methacryl".

Examples of (meth)acrylic acid ester monomers include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of hydrophilic group-containing polymerizable monomers include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^1-COO-(C_nH_{2n}O)_m-H$ (where m represents an integer of 2 to 9, n represents an integer of 2 to 4, and $R^1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

The proportion constituted by other repeating units in the polymer when all repeating units (total of structural units and monomer units) in the polymer are taken to be 100 mass% is preferably 20 mass% or less.

In particular, the proportional content of (meth)acrylic acid ester monomer units in the polymer when all repeating units (total of structural units and monomer units) in the polymer are taken to be 100 mass% is preferably 20 mass% or less, more preferably 10 mass% or less, even more preferably 5 mass% or less, particularly preferably 1 mass% or less, and most preferably 0 mass% (i.e., the polymer does not include a (meth)acrylic acid ester monomer unit). By setting the proportional content of (meth)acrylic acid ester monomer units in the polymer as 20 mass% or less, flexibility of the electrode can be further improved.

-Production method-

No specific limitations are placed on the method by which the polymer serving as the binder described above is produced. For example, the polymer can be produced by solution polymerization, suspension polymerization, bulk polymerization, emulsion polymerization, or the like.

Moreover, the polymerization method may be addition polymerization such as ionic polymerization, radical polymerization, or living radical polymerization. Furthermore, a known polymerization initiator such as cumene hydroperoxide can be used as a polymerization initiator.

Hydrogenation can be performed by a known hydrogenation method such as an oil-layer hydrogenation method or a water-layer hydrogenation method. The catalyst used in the hydrogenation may be any selective hydrogenation catalyst that is commonly known such as a palladium-based catalyst or a rhodium-based catalyst. Two or more of such catalysts may be used in combination.

The hydrogenation of the polymer may be performed, for example, by a method described in JP4509792B2. Specifically, the hydrogenation of the polymer may be performed after performing a metathesis reaction of the polymer in the presence of a catalyst and a co-olefin.

-Iodine value-

The iodine value of the polymer serving as the binder is preferably 1 g/100 g or more, and is preferably less than 100 g/100 g, more preferably 60 g/100 g or less, and even more preferably 30 g/100 g or less. When the iodine value of the polymer is within any of the ranges set forth above, interfacial resistance between the electrode mixed material layer and the current collector can be further reduced while also even further improving high-temperature storage characteristics of an electrochemical device.

-Content-

The proportion constituted by the polymer including a nitrile group-containing monomer unit and an alkylene structural unit that is contained in the electrode mixed material layer when the electrode mixed material layer as a whole is taken to be 100 mass% is preferably 0.05 mass% or more, more preferably 0.1 mass% or more, and even more preferably 0.15 mass% or more, and is preferably 2 mass% or less, more preferably 1 mass% or less, and even more preferably 0.5 mass% or less. When the proportion constituted by the polymer including a nitrile group-containing monomer unit and an alkylene structural unit among the electrode mixed material layer is within any of the ranges set forth above, interfacial resistance between the electrode mixed material layer and the current collector can be further reduced while also even further improving high-temperature storage characteristics of an electrochemical device.

[Other binders]

The electrode mixed material layer may contain binders other than the above-described polymer including a nitrile group-containing monomer unit and an alkylene structural unit (i.e., other binders). Examples of other binders include fluorine-containing polymers such as polyvinylidene fluoride (PVdF), polymethyl methacrylate (PMMA), polyacrylonitrile (PAN), acrylonitrile butadiene rubber (NBR), and other acrylic copolymers. Of these other binders, polyvinylidene fluoride (PVdF) is preferable from a viewpoint of improving close adherence of the electrode mixed material layer and the current collector.

-Content-

The proportion constituted by other binders contained in the electrode mixed material layer when the electrode mixed material layer as a whole is taken to be 100 mass% is preferably 0.5 mass% or more, more preferably 1 mass% or more, even more preferably 1.2 mass% or more, and particularly preferably 10 mass% or more, and is preferably 5 mass% or less, more preferably 3 mass% or less, and even more preferably 2 mass% or less. When the proportion constituted by other binders among the electrode mixed material layer is within any of the ranges set forth above, interfacial resistance between the electrode mixed material layer and the current collector can be further reduced while also even further improving high-temperature storage characteristics of an electrochemical device.

<<Other components>>

Examples of other components that can optionally be contained in the electrode mixed material layer include viscosity modifiers, reinforcing materials, antioxidants, and additives for electrolyte solution having a function of inhibiting electrolyte solution decomposition. One of these other components may be used individually, or two or more of these other components may be used in combination in a freely selected ratio.

«Mass per unit area»

The mass per unit area of the electrode mixed material layer is required to be not less than 21 mg/cm$^2$ and not more than 30 mg/cm$^2$ as previously described, is preferably 22 mg/cm$^2$ or more, and is preferably 28 mg/cm$^2$ or less, and more preferably 25 mg/cm$^2$ or less. When the mass per unit area of the electrode mixed material layer is less than 21 mg/cm$^2$, interfacial resistance between the electrode mixed material layer and the current collector increases, and high-temperature storage characteristics of an electrochemical device deteriorate. On the other hand, when the mass per unit area of the electrode mixed material layer is more than 30 mg/cm$^2$, flexibility of the electrode is lost, interfacial resistance between the electrode mixed material layer and the current collector increases, and high-temperature storage characteristics of an electrochemical device deteriorate.

<<Storage modulus>>

The storage modulus of the electrode mixed material layer is required to be not less than 0.1 GPa and not more than 2.2 GPa as previously described, is preferably 0.2 GPa or more, and is preferably 1.8 GPa or less, more preferably 1.5 GPa or less, even more preferably 1.1 GPa or less, and particularly preferably 0.7 GPa or less. Interfacial resistance between the electrode mixed material layer and the current collector increases and high-temperature storage characteristics of an electrochemical device deteriorate when the storage modulus of the electrode mixed material layer is less than 0.1 GPa, which is presumed to be due to reduction of film strength. On the other hand, flexibility of the electrode is lost and warping of the electrode cannot be suppressed when the storage modulus of the electrode mixed material layer is more than 2.2 GPa, which is presumed to be due to uneven distribution of the electrode active material particles and the conductive material in the electrode mixed material layer. In addition, interfacial resistance between the electrode mixed material layer and the current collector increases and high-temperature storage characteristics of an electrochemical device deteriorate.

Note that the storage modulus of the electrode mixed material layer can be controlled by, for example, altering the chemical composition of a polymer used as the binder, the type of conductive material, the type of oxide forming a coating layer of the electrode active material particles, the proportion constituted by the coating layer among the electrode active material particles as a whole, the mass per unit area of the electrode mixed material layer, the void fraction of the electrode mixed material layer, and the contents of components forming the electrode mixed material layer.

<<Loss modulus>>

The loss modulus of the electrode mixed material layer is required to be not less than 0.01 GPa and not more than 0.04 GPa as previously described, is preferably 0.015 GPa or more, and is preferably 0.035 GPa or less, and more preferably 0.025 GPa or less. When the loss modulus of the electrode mixed material layer is less than 0.01 GPa, warping of the electrode cannot be suppressed. On the other hand, interfacial resistance between the electrode mixed material layer and the current collector increases and high-temperature storage characteristics of an electrochemical device deteriorate when the loss modulus of the electrode mixed material layer is more than 0.04 GPa, which is presumed to be due to uneven distribution of the electrode active material particles and the conductive material in the electrode mixed material layer.

Note that the loss modulus of the electrode mixed material layer can be controlled by, for example, altering the chemical composition of a polymer used as the binder, the type of conductive material, the type of oxide forming a coating layer of the electrode active material particles, the proportion constituted by the coating layer among the electrode active material particles as a whole, the mass per unit area of the electrode mixed material layer, the void fraction of the electrode mixed material layer, and the contents of components forming the electrode mixed material layer.

<<Void fraction>>

The void fraction of the electrode mixed material layer is preferably 15 volume% or more, more preferably 21 volume% or more, even more preferably 24 volume% or more, and particularly preferably 30 volume% or more, and is preferably 45 volume% or less, more preferably 40 volume% or less, and even more preferably 37 volume% or less. When the void fraction of the electrode mixed material layer is within any of the ranges set forth above, the storage modulus and loss modulus described above can be controlled well to within preferable ranges, and, as a result, flexibility of the electrode can be further improved while also sufficiently suppressing warping of the electrode. In addition, interfacial resistance between the electrode mixed material layer and the current collector can be further reduced while also even further improving high-temperature storage characteristics of an electrochemical device.

Note that the void fraction of the electrode mixed material layer can be controlled by, for example, altering the types and contents of components forming the electrode mixed material layer and the conditions of heat treatment that is optionally performed in production of the electrode.

Also note that the "void fraction" of an electrode mixed material layer referred to in the present disclosure can be measured by a method described in the EXAMPLES section.

<Production method of electrode>

The presently disclosed electrode including the current collector and electrode mixed material layer set forth above can be produced by, for example, producing a slurry for an electrode that contains at least electrode active material particles, a conductive material including a fibrous carbon material, a binder, and a solvent, applying this slurry for an electrode onto the current collector, and subsequently drying the slurry for an electrode, but is not specifically limited to being produced in this manner. In production of the slurry for an electrode, it is preferable to adopt a method in which a conductive material dispersion liquid containing a conductive material including a fibrous carbon material, a binder, and a solvent is produced and then electrode active material particles are added to the obtained conductive material dispersion liquid.

More specifically, it is preferable that the presently disclosed electrode is produced by the following method.

The presently disclosed electrode is preferably produced through:

a step of mixing a conductive material including a fibrous carbon material, a binder, and a solvent to produce a conductive material dispersion liquid (dispersion liquid production step);
a step of mixing the conductive material dispersion liquid and electrode active material particles to produce a slurry for an electrode (slurry production step);
a step of applying the slurry for an electrode onto at least one side of the current collector (application step); and
a step of drying the slurry for an electrode that has been applied onto at least one side of the current collector to form an electrode mixed material layer on the current collector (drying step).

<<Dispersion liquid production step>>

In the dispersion liquid production step, a conductive material including a fibrous carbon material, a binder, and a solvent are mixed to produce a conductive material dispersion liquid. Note that the conductive material dispersion liquid does not normally contain electrode active material particles (positive electrode active material particles or negative electrode active material particles).

The binder used in production of the conductive material dispersion liquid is preferably a polymer that includes a nitrile group-containing monomer unit and an alkylene structural unit from a viewpoint of causing good dispersion of the conductive material.

An organic solvent such as N-methylpyrrolidone (NMP), N,N-dimethylformamide, or acetone, for example, can be used as the solvent that is contained in the conductive material dispersion liquid and the subsequently described slurry for an electrode. Of these solvents, N-methylpyrrolidone (NMP) is preferable from a viewpoint of solubility of the binder and dispersion stability of the fibrous carbon material.

Mixing of the components described above can be performed using a mixer such as a ball mill, a sand mill, a bead mill, a pigment disperser, a grinding machine, an ultrasonic disperser, a homogenizer, a planetary mixer, or a FILMIX, for example.

«Slurry production step»

In the slurry production step, the conductive material dispersion liquid obtained in the above-described dispersion liquid production step and electrode active material particles are mixed to produce a slurry for an electrode. No specific limitations are placed on the mixing method when the conductive material dispersion liquid and the electrode active material particles are mixed to obtain the slurry for an electrode, and the mixing can be performed using any of the mixers previously described in the "Dispersion liquid production step" section. In the slurry production step, the electrode active material particles are added to the conductive material dispersion liquid and components such as another binder described above may optionally be added to the conductive material dispersion liquid.

«Application step»

The slurry for an electrode can be applied onto the current collector by any commonly known method without any specific limitations. Specific examples of application methods that can be used include doctor blading, dip coating, reverse roll coating, direct roll coating, gravure coating, extrusion coating, and brush coating. In the application, the slurry for an electrode may be applied onto just one side of the current collector or may be applied onto both sides of the current collector. The thickness of the slurry coating on the current collector after application but before drying may be set as appropriate in accordance with the mass per unit area and thickness of the electrode mixed material layer that is be obtained through drying.

<<Drying step>>

The slurry for an electrode on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry for an electrode on the current collector in this manner, an electrode mixed material layer can be formed on the current collector to thereby obtain an electrode including the current collector and the electrode mixed material layer.
After the drying step, the electrode mixed material layer may be further subjected to a pressing process, such as mold pressing or roll pressing. The pressing process can cause good close adherence of the electrode mixed material layer and the current collector and can reduce the void fraction of the electrode mixed material layer.
In a case in which the electrode mixed material layer contains a curable polymer, this polymer may be cured after formation of the electrode mixed material layer.

(Electrochemical device)

The presently disclosed electrochemical device includes the presently disclosed electrode set forth above. The presently disclosed electrochemical device has excellent device characteristics such as high-temperature storage characteristics as a result of including the presently disclosed electrode. Note that the presently disclosed electrochemical device may be a non-aqueous secondary battery, for example, and is preferably a lithium ion secondary battery.
The following describes the configuration of a lithium ion secondary battery as one example of the presently disclosed electrochemical device. This lithium ion secondary battery includes a positive electrode, a negative electrode, an electrolyte solution, and a separator. At least one of the positive electrode and the negative electrode is the presently disclosed electrode. In other words, in this lithium ion secondary battery, the positive electrode may be the presently disclosed electrode and the negative electrode may be an electrode other than the presently disclosed electrode, the positive electrode may be an electrode other than the presently disclosed electrode and the negative electrode may be the presently disclosed electrode, or the positive electrode and the negative electrode may both be the presently disclosed electrode.

<Electrode other than presently disclosed electrode>

Any known electrode can be used without any specific limitations as an electrode that does not correspond to the presently disclosed electrode.

<Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and may, for example, preferably be set as 0.5 mass% to 15 mass%, more preferably be set as 2 mass% to 13 mass%, and even more preferably be set as 5 mass% to 10 mass%. Moreover, a known additive such as fluoroethylene carbonate or ethyl methyl sulfone may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery that is in accordance with the present disclosure can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the breaking elongation and thickness of a current collector, the mass per unit area, storage modulus, loss modulus, and void fraction of a positive electrode mixed material layer, the flexibility and warping suppression of a positive electrode, the interfacial resistance between a positive electrode mixed material layer and a current collector, and the high-temperature storage characteristics of a lithium ion secondary battery.

<Breaking elongation>

A dumbbell-shaped test specimen in accordance with a No. 5 test specimen of JIS Z2241 was cut out from a current collector and the elongation at break (breaking elongation) thereof at a tensing rate of 20 m/min was measured in accordance with JIS Z 2241:2011. Note that a TE-701 High-Speed Peeling Tester (100m type) produced by Tester Sangyo Co., Ltd. was used in measurement using this test specimen.

<Thickness>

An average value of thicknesses measured at 5 arbitrary points using a digital thickness meter (produced by Toyo Seiki Seisaku-Sho, Ltd.) was taken to be the thickness of a current collector.

<Mass per unit area>

A positive electrode that was a laminate of a positive electrode mixed material layer and a current collector was punched out such as to have an area of S ($cm^2$), and the mass of the punched-out positive electrode was taken to be M1 (mg). Separately to the above, the current collector was punched out such as to have an area of S ($cm^2$), and the mass of the punched-out current collector was taken to be M0 (mg). The mass per unit area of the positive electrode mixed material layer was calculated by the following formula.

$$\text{Mass per unit area } (\text{mg/cm}^2) = (M1 - M0)/S$$

<Storage modulus and loss modulus>

A positive electrode was cut to an appropriate size to obtain a test specimen. The obtained test specimen was fixed to a stage and was then subjected to nanoviscoelasticity measurement under the following conditions so as to determine the storage modulus and loss modulus of the positive electrode mixed material layer.

Apparatus name: Nanoindentation apparatus
Indenter: Spherical indenter (tip radius: 100 $\mu$m)
Measurement atmosphere: Vacuum ($10^{-3}$ Pa or less)
Measurement temperature: 25°C
Frequency: 20 Hz

<Void fraction>

For a positive electrode that had been cut out with a specific area, the cumulative pore volume Vp was calculated in accordance with JIS R 1655 as the void volume in the positive electrode mixed material layer. The thickness and area of the positive electrode mixed material layer were multiplied to determine the apparent volume Va of the positive electrode mixed material layer, and then a value calculated by the following formula was taken to be the void fraction $\varphi$ of the positive electrode mixed material layer.

$$\text{Void fraction } \varphi \text{ (volume\%)} = Vp/Va \times 100$$

<Flexibility>

A positive electrode was wound around a cylinder made of stainless steel having a diameter of 3.0 mm (note that the current collector was arranged at an inner side). The presence or absence of crack formation in the surface of the positive electrode mixed material layer during winding was visually checked. In a case in which the formation of cracks could not be confirmed, the same operation was performed with the diameter of the cylinder made of stainless steel reduced in order to 2.5 mm, 2.0 mm, and then 1.5 mm. The cylinder diameter at which cracks were first confirmed in the positive electrode mixed material layer of the positive electrode (crack formation cylinder diameter) was recorded and was evaluated by the following standard. A smaller crack formation cylinder diameter indicates that the positive electrode has better flexibility, and in a case in which cracks do not form even when using a cylinder of 1.5 mm in diameter, this indicates that the positive electrode has exceptional flexibility.

A: Crack formation not observed even at cylinder diameter of 1.5 mm
B: Crack formation cylinder diameter is 1.5 mm
C: Crack formation cylinder diameter is 2.0 mm
D: Crack formation cylinder diameter is 2.5 mm
E: Crack formation cylinder diameter is 3.0 mm

<Warping suppression>

A positive electrode was cut out with a strip shape having a size of 2 cm in width (application width direction) by 5 cm in length (application direction) to obtain a test specimen. The test specimen was placed on a horizontal surface with the surface at the positive electrode mixed material layer-side thereof facing downward. The two sides at length direction ends of the test specimen were pressed against the horizontal surface from above at around the center of these sides in the width direction, and the height (amount of warping) from the horizontal surface of a side at a width direction edge of the test specimen during this pressing was measured by a displacement laser (LJV-7080 produced by Keyence Corporation) and was evaluated by the following standard. A small amount of warping indicates that warping of the positive electrode is suppressed.

A: Amount of warping is 1.2 mm or less
B: Amount of warping is more than 1.2 mm and not more than 1.6 mm
C: Amount of warping is more than 1.6 mm and not more than 2 mm
D: Amount of warping is more than 2 mm or cracking of positive electrode mixed material layer occurs

<Interfacial resistance>

The resistivity ($\Omega \cdot cm^2$) at an interface between a positive electrode mixed material layer and a current collector in a produced positive electrode was measured in a 25°C environment using an electrode resistance measurement system (RM2610 produced by HIOKI E.E. Corporation).

A+: Resistivity is 0.03 $\Omega \cdot cm^2$ or less
A: Resistivity is more than 0.03 $\Omega \cdot cm^2$ and not more than 0.1 $\Omega \cdot cm^2$
B: Resistivity is more than 0.1 $\Omega \cdot cm^2$ and not more than 0.3 $\Omega \cdot cm^2$
C: Resistivity is more than 0.3 $\Omega \cdot cm^2$ and not more than 0.5 $\Omega \cdot cm^2$
D: Resistivity is more than 0.5 $\Omega \cdot cm^2$

<High-temperature storage characteristics>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging of the lithium ion secondary battery was performed with a 0.2C constant current (upper limit cell voltage 4.20 V) and CC discharging of the lithium ion secondary battery was performed to a cell voltage of 3.00 V with a 0.2C constant current.

Next, the initial IV resistance $R_1$ was measured. Specifically, the lithium ion secondary battery was charged to an SOC (State Of Charge) of 50% at 1.0C (C is a value expressed by rated capacity (mA)/1 h (hours)) in a 25°C atmosphere, and was subsequently subjected to 20 seconds of charging and 20 seconds of discharging at each of 0.5C, 1.0C, 1.5C, and 2.0C centered on an SOC of 50%. The battery voltage after 20 seconds in each case (charging side and discharging side) was plotted against the current value, and the gradient of this plot was determined as the initial IV resistance $R_1$ ($\Omega$) (IV resistance during charging and IV resistance during discharging).

The lithium ion secondary battery was subsequently CC-CV charged with a 0.2C constant current (upper limit cell voltage 4.20 V). Next, the lithium ion secondary battery was stored for 4 weeks inside an inert oven having a nitrogen atmosphere of 60°C set inside of a treatment chamber.

After this storage, the IV resistance $R_2$ after high-temperature storage was measured by the same method as for the initial IV resistance $R_1$.

The obtained initial IV resistance $R_1$ and IV resistance $R_2$ after high-temperature storage were used to calculate a rate of IV resistance increase by the following formula.

$$\text{Rate of IV resistance increase } (\%) = (R_2 - R_1)/R_1 \times 100$$

This rate of IV resistance increase (%) and the IV resistance $R_2$ after high-temperature storage were used to make an evaluation by the following standard. A smaller rate of IV resistance increase (%) and IV resistance $R_2$ ($\Omega$) after high-temperature storage indicate long-term reduction of internal resistance and that the lithium ion secondary battery has better battery characteristics.

A: Rate of IV resistance increase is less than 40% and IV resistance $R_2$ is less than 3.1 $\Omega$
B: Rate of IV resistance increase is not less than 40% and less than 50% and IV resistance $R_2$ is less than 3.5 $\Omega$
C: Rate of IV resistance increase is not less than 50% and less than 65% and IV resistance $R_2$ is less than 3.7 $\Omega$
D: Rate of IV resistance increase is 65% or more

(Example 1)

<Production of binder (hydrogenated nitrile rubber)>

A reactor was charged, in order, with 180 parts of deionized water, 25 parts of sodium dodecylbenzenesulfonate aqueous solution of 10% in concentration, 35 parts of acrylonitrile as a nitrile group-containing monomer, and 0.7 parts of t-dodecyl mercaptan as a chain transfer agent. Next, gas inside of the reactor was purged three times with nitrogen, and then 65 parts of 1,3-butadiene was added as a conjugated diene monomer. The reactor was held at 10°C while 0.1 parts of cumene hydroperoxide as a polymerization initiator, a reductant, and an appropriate amount of a chelating agent were added, and a polymerization reaction was continued under stirring. At the point at which the polymerization conversion rate reached 80%, 0.1 parts of hydroquinone aqueous solution of 10% in concentration was added as a polymerization inhibitor to stop the polymerization reaction. Next, residual monomer was removed at a water temperature of 80°C to yield a water dispersion of a polymer precursor (particulate polymer).

The obtained water dispersion of the precursor and a palladium catalyst (solution obtained by mixing 1% palladium acetate acetone solution with an equal weight of deionized water) were loaded into an autoclave such that the palladium content was 5,000 ppm relative to the weight of solid content contained in the water dispersion. A hydrogenation reaction was performed at a hydrogen pressure of 3 MPa and a temperature of 50°C for 6 hours to yield a water dispersion of a hydrogenated nitrile rubber.

The obtained water dispersion of the hydrogenated nitrile rubber was mixed with an appropriate amount of NMP as a solvent. Next, water contained in the resultant mixture was completely evaporated under reduced pressure to obtain an NMP solution (solid content concentration: 8%) of the hydrogenated nitrile rubber. The iodine value of the hydrogenated nitrile rubber was measured. The result is shown in Table 1.

<Production of conductive material dispersion liquid>

A mixing vessel was charged with 3 parts of multi-walled carbon nanotubes (BET specific surface area: 300 $m^2/g$) as a conductive material (fibrous carbon material), 7.5 parts (0.6 parts in terms of solid content) of the NMP solution of the hydrogenated nitrile rubber, and 89.5 parts of NMP as a solvent and was stirred using a disper blade (3,000 rpm, 10 minutes). The resultant mixture was dispersed at a circumferential speed of 8 m/s for 1 hour using a bead mill in which zirconia beads of 1 mm in diameter were used so as to produce a conductive material dispersion liquid (solid content concentration: 3.6%).

<Production of positive electrode active material particles having coating layer>

Positive electrode active material particles having a coating layer were obtained by mixing core particles (ternary material having layered structure; $LiNi_{0.8}Co_{0.1}Mn_{0.1}O_2$ as lithium-containing complex oxide of Co-Ni-Mn; average particle diameter: 10 $\mu$m) and boric acid ($H_3BO_3$) as a coating material in a quantitative ratio such that the proportion constituted by boron (B) among the total of the core particles and the coating material was 1%, and subsequently performing 5 hours of heat treatment at 300°C in a dry air atmosphere. The proportion constituted by the coating layer among the electrode active material particles as a whole was determined. The result is shown in Table 1.

<Production of slurry for positive electrode>

A slurry for a positive electrode was produced by adding 97.42 parts of the positive electrode active material particles having a coating layer produced as described above, 30 parts of the conductive material dispersion liquid produced as described above (solid content concentration: 3.6%; containing 0.9 parts of multi-walled CNTs and 0.18 parts of hydrogenated nitrile rubber), 1.5 parts of polyvinylidene fluoride as a binder, and NMP into a vessel and performing mixing thereof (60 rpm, 30 minutes) using a planetary mixer. Note that the additive amount of NMP was adjusted such that the viscosity of the obtained slurry for a positive electrode was within a range of 3,500 mPa·s to 4,500 mPa·s. The viscosity of the slurry for a positive electrode was measured in accordance with JIS Z8803: 1991 using a single-cylinder rotational viscometer. The measurement temperature was set as 25°C and the rotation speed during measurement was set as 60 rpm.

<Production of positive electrode for lithium ion secondary battery>

The slurry for a positive electrode obtained as described above was applied onto aluminum foil (thickness: 12 $\mu$m; breaking elongation: 20%; surface roughness: 0.8 $\mu$m) serving as a current collector by a comma coater with an application rate of 1,000 mm/min. After this application, drying was performed at 120°C for 20 minutes and at 130°C for 20 minutes, and then a further 10 hours of heat treatment was performed at 60°C to obtain a positive electrode web. This positive electrode web was rolled by roll pressing to produce a sheet-shaped positive electrode formed of the aluminum foil and a positive electrode mixed material layer of 3.4 g/cm$^3$ in density. The thickness of the sheet-shaped positive electrode was 61 μm (positive electrode mixed material layer thickness: 49 μm). This sheet-shaped positive electrode was cut to 4.8 cm in width and 50 cm in length to obtain a positive electrode for a lithium ion secondary battery. The obtained positive electrode for a lithium ion secondary battery was used to measure the mass per unit area, void fraction, storage modulus, and loss modulus of the positive electrode mixed material layer and evaluate interfacial resistance between the positive electrode mixed material layer and the current collector. In addition, "total mass of nitrile group-containing monomer units/total mass of coating layer" was calculated. The results are shown in Table 1.

<Production of negative electrode for lithium ion secondary battery>

A 5 MPa pressure-resistant vessel equipped with a stirrer was charged with 33 parts of 1,3-butadiene as a conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer) for a negative electrode. The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the binder for a negative electrode.

Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry for a negative electrode.

Next, copper foil of 15 μm in thickness was prepared as a current collector. The slurry for a negative electrode was applied onto both sides of the copper foil such as to have a coating weight after drying of 10 mg/cm$^2$ at each side and was dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode formed of the copper foil and negative electrode mixed material layers (both sides) of 1.6 g/cm$^3$ in density. The sheet-shaped negative electrode was cut to 5.0 cm in width and 52 cm in length to obtain a negative electrode for a lithium ion secondary battery.

<Production of lithium ion secondary battery>

The positive electrode for a lithium ion secondary battery and the negative electrode for a lithium ion secondary battery produced as described above were used to obtain a laminate in an order of positive electrode/negative electrode/positive electrode with electrode mixed material layers of the positive and negative electrodes facing each other and with a separator (microporous membrane made of polyethylene) of 15 μm in thickness interposed between the positive and negative electrodes. This laminate was wound up using a core of 20 mm in diameter to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF$_6$ solution of 1.0 M in concentration (solvent: ethylene carbonate/ethyl methyl carbonate = 3/7 (mass ratio); additive: containing 2 volume% (solvent ratio) of vinylene carbonate) was prepared as an electrolyte solution.

Thereafter, the compressed roll was housed inside a laminate case made of aluminum together with 3.2 g of the electrolyte solution. After connecting a nickel lead to a specific location on the negative electrode and connecting an aluminum lead to a specific location on the positive electrode, an opening of the case was thermally sealed to obtain a lithium ion secondary battery. This lithium ion secondary battery had a pouch shape of a specific size capable of housing the above-described roll. The nominal capacity of the battery was 700 mAh.

High-temperature storage characteristics were evaluated for the obtained lithium ion secondary battery. The result is shown in Table 1.

(Examples 2 and 3)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the hydrogenated nitrile rubber serving as a binder, the amounts of acrylonitrile and 1,3-butadiene were changed as indicated below. The results are shown in Table 1.

Example 2: 20 parts of acrylonitrile, 80 parts of 1,3-butadiene
Example 3: 60 parts of acrylonitrile, 40 parts of 1,3-butadiene

(Example 4)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the hydrogenated nitrile rubber serving as a binder, 35 parts of acrylonitrile, 50 parts of 1,3-butadiene, and 15 parts of n-butyl acrylate were used as monomers. The results are shown in Table 1.

(Example 5)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the positive electrode for a lithium ion secondary battery, the amount of the slurry for a positive electrode that was applied onto the current collector was adjusted such as to change the mass per unit area of the positive electrode mixed material layer to 26 mg/cm$^2$. The results are shown in Table 1.

(Examples 6 and 7)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the positive electrode for a lithium ion secondary battery, aluminum foil having a thickness and a breaking elongation indicated below was used as a current collector. The results are shown in Table 1.

Example 6: 6 $\mu$m thickness, 20% breaking elongation, 0.8 $\mu$m surface roughness
Example 7: 12 $\mu$m thickness, 11% breaking elongation, 0.8 $\mu$m surface roughness

(Example 8)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the conductive material dispersion liquid, 2.7 parts of multi-walled carbon nanotubes (BET specific surface area: 300 m$^2$/g) and 0.3 parts of graphene were used instead of 3 parts of multi-walled carbon nanotubes (BET specific surface area: 300 m$^2$/g). The results are shown in Table 1.

(Examples 9 and 10)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the positive electrode active material particles having a coating layer, the amount of boric acid ($H_3BO_3$) used as a coating material was changed such as to change the proportion constituted by the coating layer among the electrode active material particles as a whole to 8% (Example 9) or 0.3% (Example 10). The results are shown in Table 2.

(Comparative Examples 1 and 5)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the positive electrode for a lithium ion secondary battery, aluminum foil having a thickness and a breaking elongation indicated below was used as a current collector. The results are shown in Table 2.

Comparative Example 1: 20 $\mu$m thickness, 3% breaking elongation, 0.8 $\mu$m surface roughness
Comparative Example 5: 12 $\mu$m thickness, 50% breaking elongation, 0.8 $\mu$m surface roughness

(Comparative Example 2)

Positive electrode active material particles having a coating layer, a positive electrode for a lithium ion secondary battery, a negative electrode for a lithium ion secondary battery, and a lithium ion secondary battery were prepared and various evaluations were performed in the same way as in Example 1 with the exception that a slurry for a positive electrode produced as described below, without producing a hydrogenated nitrile rubber and a conductive material dispersion liquid, was used. The results are shown in Table 2.

<Production of slurry for positive electrode>

A slurry for a positive electrode was produced by adding 97.42 parts of the positive electrode active material particles having a coating layer, 0.9 parts of multi-walled carbon nanotubes (BET specific surface area: 300 $m^2/g$) as a conductive material (fibrous carbon material), 1.68 parts of polyvinylidene fluoride as a binder, and NMP into a vessel and performing mixing thereof (60 rpm, 30 minutes) using a planetary mixer. Note that the additive amount of NMP was adjusted such that the viscosity of the obtained slurry for a positive electrode was within a range of 3,500 mPa·s to 4,500 mPa·s. The viscosity of the slurry for a positive electrode was measured in accordance with JIS Z8803:1991 using a single-cylinder rotational viscometer. The measurement temperature was set as 25°C and the rotation speed during measurement was set as 60 rpm.

(Comparative Example 3)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the positive electrode for a lithium ion secondary battery, the application rate of the slurry for a positive electrode was changed to 3,000 mm/min and the amount of the slurry for a positive electrode that was applied onto the current collector was adjusted such as to change the mass per unit area of the positive electrode mixed material layer to 19 mg/cm$^2$. The results are shown in Table 2.

(Comparative Example 4)

A hydrogenated nitrile rubber, a conductive material dispersion liquid, positive electrode active material particles having a coating layer, a slurry for a positive electrode, a positive electrode for a lithium ion secondary battery, a negative electrode for a lithium ion secondary battery, and a lithium ion secondary battery were prepared and various evaluations were performed in the same way as in Example 1 with the exception that in production of the positive electrode for a lithium ion secondary battery, the amount of the slurry for a positive electrode that was applied onto the current collector was adjusted such as to change the mass per unit area of the positive electrode mixed material layer to 35 mg/cm$^2$. The results are shown in Table 2.

(Comparative Example 6)

A conductive material dispersion liquid, positive electrode active material particles having a coating layer, a positive electrode for a lithium ion secondary battery, a negative electrode for a lithium ion secondary battery, and a lithium ion secondary battery were prepared and various evaluations were performed in the same way as in Example 1 with the exception that in production of the hydrogenated nitrile rubber serving as a binder, the amount of acrylonitrile was changed to 10 parts and the amount of 1,3-butadiene was changed to 90 parts, and that a slurry for a positive electrode produced as described below was used. The results are shown in Table 2.

<Production of slurry for positive electrode>

A slurry for a positive electrode was produced by adding 97.92 parts of the positive electrode active material particles having a coating layer, 30 parts of the conductive material dispersion liquid (solid content concentration: 3.6%; containing 0.9 parts of multi-walled CNTs and 0.18 parts of hydrogenated nitrile rubber), 1.0 parts of polyvinylidene fluoride as a binder, and NMP into a vessel and performing mixing thereof (60 rpm, 30 minutes) using a planetary mixer. Note that the additive amount of NMP was adjusted such that the viscosity of the obtained slurry for a positive electrode was within a range of 3,500 mPa·s to 4,500 mPa·s. The viscosity of the slurry for a positive electrode was measured in accordance with JIS Z8803:1991 using a single-cylinder rotational viscometer. The measurement temperature was set as 25°C and the rotation speed during measurement was set as 60 rpm.

In Tables 1 and 2, shown below:

"Active material" indicates positive electrode active material particles;
"NCM" indicates $LiNi_{0.8}Co_{0.1}Mn_{0.1}O_2$;
"Fibrous" indicates fibrous carbon material;
"Non-fibrous" indicates non-fibrous carbon material;
"Non-fibrous/Fibrous" indicates ratio of mass of non-fibrous carbon material relative to mass of fibrous carbon material;
"MWCNT" indicates multi-walled carbon nanotubes;
"GR" indicates graphene;
"AN" indicates nitrile group-containing monomer units;
"BD" indicates 1,3-butadiene-derived structural units (alkylene structural units and conjugated diene monomer units);
"BA" indicates n-butyl acrylate units;
"HNBR" indicates hydrogenated nitrile rubber;
"PVdF" indicates polyvinylidene fluoride;
"Al" indicates aluminum; and
"AN/Coating layer" indicates total mass of nitrile group-containing monomer units/total mass of coating layer.

[Table 1]

| | Example 1 | Example 2 | Example 3 | Example 4 | Example 5 | Example 6 | Example 7 | Example 8 |
|---|---|---|---|---|---|---|---|---|
| | | | | | | | | |

| | | | | Example 1 | Example 2 | Example 3 | Example 4 | Example 5 | Example 6 | Example 7 | Example 8 |
|---|---|---|---|---|---|---|---|---|---|---|---|
| Positive electrode mixed material layer | Active material | | Type | NCM | NCM | NCM | NCM | NCM | NCM | NCM | NCM |
| | | Coating layer | Type | Boron oxide | Boron oxide | Boron oxide | Boron oxide | Boron oxide | Boron oxide | Boron oxide | Boron oxide |
| | | | Proportion constituted among active material [mass%] | 1 | 1 | 1 | 1 | 1 | 1 | 1 | 1 |
| | Conductive material | Fibrous | Type | MWCNT | MWCNT | MWCNT | MWCNT | MWCNT | MWCNT | MWCNT | MWCNT |
| | | | BET specific surface area [m$^2$/g] | 300 | 300 | 300 | 300 | 300 | 300 | 300 | 300 |
| | | Non-fibrous | Type | - | - | - | - | - | - | - | GR |
| | | Non-fibrous/Fibrous [-] | | - | - | - | - | - | - | - | 0.1 |
| | Binder | HNBR | AN [mass%] | 35 | 20 | 60 | 35 | 35 | 35 | 35 | 35 |
| | | | BD [mass%] | 65 | 80 | 40 | 50 | 65 | 65 | 65 | 65 |
| | | | BA [mass%] | - | - | - | 15 | - | - | - | - |
| | | | Iodine value [g/100 g] | 11 | 11 | 11 | 11 | 11 | 11 | 11 | 11 |
| | | PVdF | | Yes | Yes | Yes | Yes | Yes | Yes | Yes | Yes |
| | Void fraction [volume%] | | | 30 | 40 | 40 | 35 | 35 | 30 | 30 | 30 |
| | Mass per unit area [mg/cm$^2$] | | | 23 | 23 | 23 | 23 | 26 | 23 | 23 | 23 |
| | Storage modulus [GPa] | | | 0.3 | 1.5 | 1.8 | 0.7 | 0.7 | 0.3 | 0.3 | 0.4 |
| | Loss modulus [GPa] | | | 0.015 | 0.035 | 0.033 | 0.03 | 0.035 | 0.015 | 0.015 | 0.02 |
| | AN/Coating layer [-] | | | 0.065 | 0.037 | 0.111 | 0.065 | 0.065 | 0.065 | 0.065 | 0.065 |
| | Proportion [mass%] | Active material | | 97.42 | 97.42 | 97.42 | 97.42 | 97.42 | 97.42 | 97.42 | 97.42 |
| | | Conductive material | | 0.9 | 0.9 | 0.9 | 0.9 | 0.9 | 0.9 | 0.9 | 0.9 |
| | | HNBR | | 0.18 | 0.18 | 0.18 | 0.18 | 0.18 | 0.18 | 0.18 | 0.18 |
| | | PVdF | | 1.5 | 1.5 | 1.5 | 1.5 | 1.5 | 1.5 | 1.5 | 1.5 |

EP 4 318 640 A1

(continued)

|  |  | Example 1 | Example 2 | Example 3 | Example 4 | Example 5 | Example 6 | Example 7 | Example 8 |
|---|---|---|---|---|---|---|---|---|---|
| Current collector | Material | A1 | A1 | A1 | A1 | A1 | A1 | A1 | A1 |
|  | Thickness [μm] | 12 | 12 | 12 | 12 | 12 | 6 | 12 | 12 |
|  | Breaking elongation [%] | 20 | 20 | 20 | 20 | 20 | 20 | 11 | 20 |
| Evaluation | Warping | A | B | B | A | A | B | B | A |
|  | Flexibility | A | B | B | B | A | B | B | A |
|  | Interfacial resistance | A | A | B | A | B | A | B | A+ |
|  | High-temperature storage characteristics | A | B | B | A | B | A | B | A |

[Table 2]

| Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|

(continued)

| Positive electrode mixed material layer | | | | | Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Active material | | Type | | | NCM | NCM | NCM | NCM | NCM | NCM | NCM | NCM |
| | | Coating layer | Type | | Boron oxide | Boron oxide | Boron oxide | Boron oxide | Boron oxide | Boron oxide | Boron oxide | Boron oxide |
| | | | Proportion constituted among active material [mass%] | | 8 | 0.3 | 1 | 1 | 1 | 1 | 1 | 1 |
| Conductive material | | Fibrous | Type | | MWCNT | MWCNT | MWCNT | MWCNT | MWCNT | MWCNT | MWCNT | MWCNT |
| | | | BET specific surface area [m$^2$/g] | | 300 | 300 | 300 | 300 | 300 | 300 | 300 | 300 |
| | | Non-fibrous | Type | | - | - | - | - | - | - | - | - |
| | Non-fibrous/Fibrous [-] | | | | - | - | - | - | - | - | - | - |
| Binder | | HNBR | AN [mass%] | | 35 | 35 | 35 | - | 35 | 35 | 35 | 10 |
| | | | BD [mass%] | | 65 | 65 | 65 | - | 65 | 65 | 65 | 90 |
| | | | BA [mass%] | | - | - | - | - | - | - | - | - |
| | | | Iodine value [g/100 g] | | 11 | 11 | 11 | - | 11 | 11 | 11 | 11 |
| | | PVdF | | | Yes | Yes | Yes | Yes | Yes | Yes | Yes | Yes |
| | Void fraction [volume%] | | | | 30 | 30 | 30 | 45 | 20 | 30 | 30 | 30 |
| | Mass per unit area [mg/cm$^2$] | | | | 23 | 23 | 23 | 23 | 19 | 35 | 23 | 23 |
| | Storage modulus [GPa] | | | | 1.6 | 0.8 | 0.3 | 2.5 | 0.2 | 0.8 | 0.3 | 0.08 |
| | Loss modulus [GPa] | | | | 0.04 | 0.035 | 0.015 | 0.03 | 0.05 | 0.035 | 0.015 | 0.005 |
| | AN/Coating layer [-] | | | | 0.008 | 0.216 | 0.065 | - | 0.065 | 0.065 | 0.065 | 0.018 |
| | Proportion [mass%] | Active material | | | 97.42 | 97.42 | 97.42 | 97.42 | 97.42 | 97.42 | 97.42 | 97.92 |
| | | Conductive material | | | 0.9 | 0.9 | 0.9 | 0.9 | 0.9 | 0.9 | 0.9 | 0.9 |
| | | HNBR | | | 0.18 | 0.18 | 0.18 | 0 | 0.18 | 0.18 | 0.18 | 0.18 |
| | | PVdF | | | 1.5 | 1.5 | 1.5 | 1.68 | 1.5 | 1.5 | 1.5 | 1 |

| | | Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|---|---|
| Current collector | Material | Al | Al | Al | Al | Al | Al | Al | Al |
| | Thickness [$\mu$m] | 12 | 12 | 20 | 12 | 12 | 12 | 12 | 12 |
| | Breaking elongation [%] | 20 | 20 | 3 | 20 | 20 | 20 | 50 | 20 |
| Evaluation | Warping | C | B | B | D | B | B | B | C |
| | Flexibility | B | B | D | D | B | C | B | B |
| | Interfacial resistance | B | C | B | D | D | D | D | D |
| | High-temperature storage characteristics | B | B | C | C | D | D | C | D |

It can be seen from Tables 1 and 2 that the positive electrodes of Examples 1 to 10, which each include a specific current collector and a specific positive electrode mixed material layer, have excellent flexibility, suppressed warping, and reduced interfacial resistance between the positive electrode mixed material layer and the current collector. It can also be seen that a lithium ion secondary battery can be caused to display excellent high-temperature storage characteristics through the positive electrodes of Examples 1 to 10.

INDUSTRIAL APPLICABILITY

According to the present disclosure, it is possible to provide an electrode for an electrochemical device that has excellent flexibility, suppressed warping, and reduced interfacial resistance between an electrode mixed material layer and a current collector and that can cause an electrochemical device to display excellent high-temperature storage characteristics.

Moreover, according to the present disclosure, it is possible to provide an electrochemical device having excellent high-temperature storage characteristics.

**Claims**

1. An electrode for an electrochemical device comprising: a current collector; and an electrode mixed material layer formed on the current collector, wherein

    the current collector is formed of either or both of aluminum and an aluminum alloy, has a thickness of not less than 5 $\mu$m and less than 15 $\mu$m, and has a breaking elongation of not less than 10% and not more than 40%, the electrode mixed material layer contains electrode active material particles, a conductive material that includes a fibrous carbon material, and a binder, and
    the electrode mixed material layer has a mass per unit area of not less than 21 mg/cm$^2$ and not more than 30 mg/cm$^2$, a storage modulus of not less than 0.1 GPa and not more than 2.2 GPa, and a loss modulus of not less than 0.01 GPa and not more than 0.04 GPa.

2. The electrode for an electrochemical device according to claim 1, wherein the binder includes a polymer that includes a nitrile group-containing monomer unit and an alkylene structural unit.

3. The electrode for an electrochemical device according to claim 1 or 2, wherein the electrode active material particles have a coating layer formed of one or more selected from the group consisting of zirconium oxide, aluminum oxide, boron oxide, and phosphorus oxide formed at surfaces thereof, and the coating layer constitutes a proportion of not less than 0.2 mass% and not more than 10 mass% among the electrode active material particles as a whole.

4. The electrode for an electrochemical device according to claim 1, wherein

    the binder includes a polymer that includes a nitrile group-containing monomer unit and an alkylene structural unit, the electrode active material particles have a coating layer formed of one or more selected from the group consisting of zirconium oxide, aluminum oxide, boron oxide, and phosphorus oxide formed at surfaces thereof, and
    a ratio of total mass of the nitrile group-containing monomer unit included in the polymer in the electrode mixed material layer relative to total mass of the coating layer formed at the surfaces of the electrode active material particles in the electrode mixed material layer is not less than $0.1 \times 10^{-2}$ and not more than $30 \times 10^{-2}$.

5. The electrode for an electrochemical device according to any one of claims 1 to 4, wherein the fibrous carbon material has a BET specific surface area of 250 m$^2$/g or more.

6. The electrode for an electrochemical device according to any one of claims 1 to 5, wherein the conductive material further includes a non-fibrous carbon material.

7. The electrode for an electrochemical device according to claim 6, wherein the non-fibrous carbon material is graphene.

8. The electrode for an electrochemical device according to any one of claims 1 to 7, wherein the electrode active material particles contain nickel and cobalt and further contain either or both of manganese and aluminum.

9. An electrochemical device comprising the electrode for an electrochemical device according to any one of claims 1 to 8.

## INTERNATIONAL SEARCH REPORT

International application No.

**PCT/JP2022/016300**

### A. CLASSIFICATION OF SUBJECT MATTER

*H01M 4/131*(2010.01)i; *H01G 11/06*(2013.01)i; *H01G 11/26*(2013.01)i; *H01G 11/30*(2013.01)i; *H01G 11/38*(2013.01)i; *H01G 11/68*(2013.01)i; *H01M 4/13*(2010.01)i; *H01M 4/36*(2006.01)i; *H01M 4/505*(2010.01)i; *H01M 4/525*(2010.01)i; *H01M 4/62*(2006.01)i; *H01M 4/66*(2006.01)i

FI:    H01M4/131; H01M4/66 A; H01M4/62 Z; H01M4/13; H01M4/36 C; H01M4/525; H01M4/505; H01G11/06; H01G11/68; H01G11/26; H01G11/38; H01G11/30

According to International Patent Classification (IPC) or to both national classification and IPC

### B. FIELDS SEARCHED

Minimum documentation searched (classification system followed by classification symbols)

H01M4/131; H01G11/06; H01G11/26; H01G11/30; H01G11/38; H01G11/68; H01M4/13; H01M4/36; H01M4/505; H01M4/525; H01M4/62; H01M4/66

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 9-213339 A (FUJI PHOTO FILM CO., LTD.) 15 August 1997 (1997-08-15) | 1-9 |
| A | JP 2012-140702 A (MITSUBISHI ALUMINIUM CO.) 26 July 2012 (2012-07-26) | 1-9 |
| A | WO 2016/157842 A1 (NIPPON ZEON CO.) 06 October 2016 (2016-10-06) | 1-9 |
| A | JP 2013-119576 A (TOYOTA CENTRAL R&D LABS., INC.) 17 June 2013 (2013-06-17) | 1-9 |
| A | WO 2016/133201 A1 (THE NATIONAL INSTITUTE OF ADVANCED INDUSTRIAL SCIENCE AND TECHNOLOGY) 25 August 2016 (2016-08-25) | 1-9 |
| A | JP 2020-515014 A (LG CHEM, LTD.) 21 May 2020 (2020-05-21) | 1-9 |
| A | JP 2013-152932 A (HUTCHINSON) 08 August 2013 (2013-08-08) | 1-9 |
| A | JP 2014-127235 A (TOYOTA INDUSTRIES CORP.) 07 July 2014 (2014-07-07) | 1-9 |

✓ Further documents are listed in the continuation of Box C.          ✓ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **21 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/016300**

**C.      DOCUMENTS CONSIDERED TO BE RELEVANT**

| Category* | Citation of document, with indication, where appropriate, of the relevant passages | Relevant to claim No. |
|---|---|---|
| A | WO 2019/193874 A1 (PANASONIC INTELLECTUAL PROPERTY MANAGEMENT CO., LTD.) 10 October 2019 (2019-10-10) | 1-9 |

Form PCT/ISA/210 (second sheet) (January 2015)

**INTERNATIONAL SEARCH REPORT**
Information on patent family members

International application No.

**PCT/JP2022/016300**

| Patent document cited in search report | | | Publication date (day/month/year) | Patent family member(s) | | | Publication date (day/month/year) |
|---|---|---|---|---|---|---|---|
| JP | 9-213339 | A | 15 August 1997 | (Family: none) | | | |
| JP | 2012-140702 | A | 26 July 2012 | CN | 102569817 | A | |
| WO | 2016/157842 | A1 | 06 October 2016 | US | 2018/0090764 | A1 | |
| | | | | EP | 3276713 | A1 | |
| | | | | KR | 10-2017-0117194 | A | |
| | | | | CN | 107408701 | A | |
| JP | 2013-119576 | A | 17 June 2013 | US | 2013/0143998 | A1 | |
| WO | 2016/133201 | A1 | 25 August 2016 | US | 2018/0044184 | A1 | |
| | | | | CN | 107406682 | A | |
| JP | 2020-515014 | A | 21 May 2020 | US | 2020/0028174 | A1 | |
| | | | | EP | 3525270 | A1 | |
| | | | | KR | 10-2018-0107759 | A | |
| | | | | CN | 109845005 | A | |
| JP | 2013-152932 | A | 08 August 2013 | US | 2013/0183577 | A1 | |
| | | | | EP | 2618409 | A1 | |
| | | | | FR | 2985857 | A1 | |
| | | | | CN | 103208610 | A | |
| | | | | CA | 2802199 | A1 | |
| | | | | KR | 10-2013-0084638 | A | |
| JP | 2014-127235 | A | 07 July 2014 | (Family: none) | | | |
| WO | 2019/193874 | A1 | 10 October 2019 | US | 2021/0104736 | A1 | |
| | | | | CN | 111937194 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019502240 A
- JP 4509792 B
- JP 2012204303 A